Europäisches Patentamt

European Patent Office

Office européen des brevets

(19)

(11) Veröffentlichungsnummer: **0 118 588**
**B1**

(12) **EUROPÄISCHE PATENTSCHRIFT**

(45) Veröffentlichungstag der Patentschrift:
**03.05.89**

(21) Anmeldenummer: **83105974.6**

(22) Anmeldetag: **18.06.83**

(51) Int. Cl.⁴: **C 01 B 33/26,** C 01 B 33/28,
C 01 B 33/32

(54) **Hydrothermaler Aufschluss von Aluminiumsilikat.**

(30) Priorität: **03.02.83 DE 3303515**

(43) Veröffentlichungstag der Anmeldung:
**19.09.84 Patentblatt 84/38**

(45) Bekanntmachung des Hinweises auf die Patenterteilung:
**03.05.89 Patentblatt 89/18**

(84) Benannte Vertragsstaaten:
**AT DE FR IT NL**

(56) Entgegenhaltungen:
**EP-A- 0 033 109**
**WO-A-82/02844**
**DE-B- 2 609 831**

(73) Patentinhaber: **Henkel Kommanditgesellschaft auf Aktien, Postfach 1100 Henkelstrasse 67, D-4000 Düsseldorf-Holthausen (DE)**

(72) Erfinder: **Christophliemk, Peter, Dr., Rudolf-Breitscheid-Strasse 61, D-4000 Düsseldorf 13 (DE)**
Erfinder: **Novotny, Rudolf, Dr., Am Rittersberg 14, D-4000 Düsseldorf 13 (DE)**
Erfinder: **von Laufenberg, Jürgen, Dr., Scheidemannstrasse 5, D-5657 Haan 1 (DE)**
Erfinder: **Sadlowsky, Josef, Fleherstrasse 184, D-4000 Düsseldorf (DE)**

## Beschreibung

Die vorliegende Erfindung betrifft ein Verfahren zum hydrothermalen Aufschluß von Aluminiumsilikaten und Alkalialuminiumsilikaten mit wäßriger Natriumhydroxidlösung unter Druck und bei erhöhten Temperaturen in Gegenwart eines hohen Überschusses an unter diesen hydrothermalen Bedingungen löslichen Silikaten.

Gemäß EP-A-33 109 ist ein Verfahren zur hydrothermalen Herstellung von Natriumsilikatlösungen in Gegenwart überschüssiger Mengen an unter derartigen Bedingungen aufschließbarer Silikat-Komponente bekannt.

Sowohl die mineralischen als auch die technisch bevorzugten synthetischen Aluminiumsilikate und Alkalialuminiumsilikate sind in wäßriger Natriumhydroxidlösung auch bei erhöhten Temperaturen und unter Druck kaum löslich. Derartige Verbindungen werden im Gegenteil technisch überwiegend hydrothermal hergestellt. Dabei werden eine freies Alkali enthaltende wäßrige Silikatlösung sowie eine ebenfalls freies Alkali enthaltende Aluminatlösung vereinigt, wobei dann ein entsprechendes Alkalialuminiumsilikat bei Temperaturen oberhalb Raumtemperatur sofort ausfällt. Selbst bei anschließender hydrothermaler Nachbehandlung dieser überschüssiges Alkali enthaltenden Suspension bei Temperaturen von etwa 200 °C und mehr, beispielsweise zum Zwekke einer Kristallisation oder Umkristallisation, findet keine merkliche Auflösung des Feststoffs statt. Die Summe an gelöstem Silikat und gelöstem Aluminat beträgt hierbei stets deutlich unterhalb 1 Gewichts-%. Gerade diese Stabilität der Aluminiumsilikate und Alkalialuminiumsilikate gegenüber alkalischen Lösungen wird technisch genutzt, um wäßrige Alkalisilikatlösungen trotz ihres zum Teil sehr hohen Gehaltes an Alkali bei Temperaturen von etwa 100 °C und darüber unter Verwendung von Festbettfiltern aus Filterhilfsmitteln auf Aluminiumsilikatbasis zu filtrieren. Im Anschluß an diese Filtration wird der sogenannte Filterschlamm aus Filterhilfsmitteln und den unlöslichen Bestandteilen der zu filtrierenden Lösung nach dem bisherigen Stand der Technik verworfen, das heißt, mit einem hohen Kostenaufwand vorbehandelt und/oder deponiert. In ähnlicher Weise war bisher auch bei technischen Abfallprodukten auf Alkalialuminiumsilikat-Basis, wie sie beispielsweise durch Fehlkristallisation oder auch als betrieblich unvermeidbare Nebenprodukte im Rahmen von Molekularsieb-Synthesen anfallen können, im Regelfall mangels technischer Verwendbarkeit stets eine Deponierung solcher Abfälle erforderlich.

Die Aufgabe der vorliegenden Erfindung ist es daher, ein Verfahren zur ökologisch und ökonomisch vorteilhaften Verwertung von aluminiumsilikat- und alkalialuminiumsilikathaltigen Filterschlamm zu entwickeln, bei dem die vorstehend aufgezeigten Nachteile vermieden werden. Zusätzlich betrifft diese Aufgabenstellung die Erzielung einer möglichst hohen Raum/Zeit-Ausbeute bei einem möglichst geringen Energieaufwand innerhalb des hydrothermalen Aufschlußverfahrens.

Überraschenderweise wurde nun gefunden, daß unter technisch zu realisierenden Bedingungen und in ökonomischer Weise die in den obigen Rückständen enthaltenen Aluminiumsilikate und Alkalialuminiumsilikate in Gegenwart eines hohen Überschusses an gelösten bzw. löslichen Silikaten vollständig bzw. zum ganz überwiegenden Anteil gelöst werden können. Die resultierende, einen geringen Gehalt an gelöstem Aluminat aufweisende Natriumsilikatlösung kann dann für weitere chemische Umsetzungen verwendet werden. Zur Nutzung des hohen Wertgehaltes an gelöstem Aluminat erbringt die Verwendung derartiger Natriumsilikatlösungen als Silikatkomponente bei der Herstellung von Molekularsieben besondere Vorteile.

Gegenstand der Erfindung ist somit ein Verfahren zum hydrothermalen Aufschluß von Aluminiumsilikaten und Alkalialuminiumsilikaten mit wäßriger Natriumhydroxidlösung unter Druck und bei erhöhten Temperaturen in Gegenwart von löslichen Silikaten, dadurch gekennzeichnet, daß man eine 20 bis 50 Gewichtsprozent NaOH enthaltende wäßrige Lösung mit Aluminiumsilikaten und/oder Alkalialuminiumsilikaten sowie einer hydrothermal aufschließbaren Silikat-Komponente vermischt, wobei in der Mischung die Gewichtsverhältnisse von $SiO_2 : Al_2O_3$ mindestens 30:1 und die Gewichtsverhältnisse $SiO_2 : Na_2O$ mindestens 1,5:1 betragen und die Gemische bei Temperaturen von 180 bis 250 °C sowie den diesen Temperaturen entsprechenden Drücken von gesättigtem Wasserdampf umsetzt und danach die anfallende, das gelöste Aluminium enthaltende Natriumsilikatlösung abgetrennt wird.

Es ist weiterhin zweckmäßig, die anfallende Natriumsilikatlösung zu filtrieren. Als Silikatkomponente im Sinne des Anmeldungsgegenstandes finden Kieselsäure und/oder Sand und/oder gelöstes oder hydrothermal aufschließbares Natriumsilikat Anwendung. Der Überschuß von $SiO_2 : Al_2O_3$ kann erheblich sein und vorzugsweise 50:1 bis 150:1 betragen.

Bei Erniedrigung des Verhältnisses $SiO_2 : Al_2O_3$ im Gesamtansatz auf deutlich unter 30:1 erniedrigt sich der hydrothermal aufschließbare Anteil an Aluminiumsilikat bzw. Alkalialuminiumsilikat signifikant.

Im folgenden sind unter «Filterschlamm» derartige technisch in großen Mengen anfallende Rückstände aus Filterhilfsmitteln und ggf. weiteren ungelösten hoch silikathaltigen Komponenten zu verstehen, wobei das wasserfreie reine Filterhilfsmittel selbst einen Gehalt von 10-30 Gew.-% $Al_2O_3$ und 50-85% $SiO_2$ aufweist und der Gehalt an $Al_2O_3$ im Gesamtfeststoff mindestens 3% beträgt.

Als «Filterschlamm» werden jedoch im folgenden auch als Abfall anfallende Alkalialuminiumsilikate zeolithischer oder feldspatoider Struktur mit einem Gehalt von 15 bis 38% $Al_2O_3$ und 42 bis 75% $SiO_2$, bezogen auf die wasserfreie Substanz, bezeichnet.

Aus ökonomischen Gründen ist es zweckmäßig, die Filterschlämme nicht in Gegenwart ganz überwiegend bereits gelöster Natriumsilikate, d.h. beispielsweise in technischer Wasserglaslösung, zu lösen, sondern unter gleichzeitiger Ausnutzung der vollen Anlagenkapazität des Hydrothermalreaktors bevorzugt feste, hydrothermal aufschließbare Silikatkomponenten wie Kieselsäure oder ganz besonders bevorzugt Quarzsand zu verwenden. Aus diesem Grunde bietet eine Kopplung des erfindungsgemäßen Verfahrens mit dem hydrothermalen Verfahren zur Herstellung von Natriumsilikatlösung aus Quarzsand und Natronlauge besondere Verfahrensvorteile.

Bei der Filtration von technischen Wasserglaslösungen werden Filterhilfsmittel auf Alkalisilikatbasis üblicherweise in Mengen von 1 kg bis 3 kg pro Tonne Alkalisilikatlösung «verbraucht», d.h. nach abgeschlossenem Filtrationsvorgang zusammen mit anderen Filterrückständen aus der Filtrationsanlage ausgetragen und nach – wegen eines sonst zu hohen Restalkaligehaltes – erforderlicher Vorbehandlung auf Deponien gelagert.

Das erfindungsgemässe Verfahren erlaubt bei Beibehaltung der für die hydrothermale Herstellung von Natriumsilikat optimalen Produktionsbedingungen die Verringerung des Filterschlammanfalls aus diesem Prozeß – in Abhängigkeit von Art und Menge des Filterhilfsmittels/Filterschlamms sowie von Art und Menge der im Filterhilfsmittel und Sand vorliegenden und schwerlösliche Silikate bildenden Metallionen – auf ggf. weit unter 10% bezogen auf die Menge des sonst anfallenden Filterschlammes.

Fallen bei dem Hydrothermal-Verfahren nicht bereits Filterschlämme in hinreichender Menge an, so lassen sich erfindungsgemäß auch andere Schlämme entsprechender Zusammensetzung ohne weitere Einschränkungen einsetzen, wie beispielsweise Filterschlämme von nicht hydrothermal hergestellten Wasserglaslösungen oder Abfälle aus der Molekularsiebproduktion.

Um eine merkliche Auflösung sowohl des Filterschlamms als auch der silikatischen Hauptkomponente wie bevorzugt Sand in ökonomischer Raum-/Zeit-Ausbeute zu erzielen, sind Reaktionstemperaturen von zumindest etwa 180 °C bei Alkalikonzentrationen in der Kontaktlösung von zumindest 20% NaOH erforderlich. Technisch bevorzugt sind erfindungsgemäß jedoch Reaktionstemperaturen im Bereich von 200 bis 210 °C und Alkalikonzentrationen von 25 bis 35% NaOH. Unter diesen Bedingungen läßt sich beispielsweise Filterschlamm mit wie oben angegebener Zusammensetzung in einer Menge von bis zu 5 Gew.-%, bezogen auf die Gesamtsilikatmenge, innerhalb 60 Minuten praktisch vollständig lösen.

Mit zunehmender Temperatur läßt sich zwar die zum weitgehenden Lösen von Filterschlamm und Sand erforderliche Reaktionszeit verkürzen; im Rahmen einer technischen Realisierung sind jedoch bei Hydrothermalreaktionen Reaktionstemperaturen von maximal 250 °C und Alkalikonzentrationen von maximal 50% NaOH in der Kontaktlösung zweckmäßigerweise nicht zu überschreiten. Für eine rasche Umsetzung sind alle Feststoffe möglichst feinteilig einzubringen. Das Reaktionsgemisch wird zumindest soweit in Bewegung gehalten, daß der fein suspendierte Feststoff nicht sedimentiert. Nach beendeter hydrothermaler Reaktion wird die entstandene Lösung bei Vorliegen merklicher Mengen Rückstand aus den eingesetzten Feststoffkomponenten je nach vorgesehener Weiterverwendung ggf. filtriert.

Für die technische Anwendung des erfindungsgemäßen Verfahrens ist es von wesentlicher Bedeutung, daß sich der hydrothermale Aufschluss in seinen Verfahrensparametern in die hydrothermale Herstellung von Natriumsilikat aus Sand und Natronlauge weitestgehend einfügt. Die Filterschlammauflösung läuft als eine Art Nebenreaktion neben der Umsetzung der silikatischen Hauptkomponente ohne wesentliche Veränderungen in den wichtigsten Verfahrensschritten ab. Die Grundvoraussetzungen dafür sind in dem erfindungsgemäßen Verfahren dadurch gegeben, daß Reaktionstemperatur und Reaktionsdauer einerseits, sowie optimale Natronlaugekonzentration andererseits bei Filterschlammumsetzung und hydrothermaler Natronsilikatherstellung im Rahmen einer großtechnischen Herstellung weitgehend übereinstimmen.

Zur Durchführung des erfindungsgemäßen Verfahrens können daher generell alle für hydrothermale Hochdrucksynthesen gebräuchlichen Reaktionsbehälter beziehungsweise Reaktoren wie beispielsweise rotierende oder statische Kessel sowie Rohrreaktoren Verwendung finden, insbesondere solche, die für die hydrothermale Natriumsilikatherstellung aus Sand und Natronlauge bereits technisch eingesetzt werden.

Aufbau und Verwendung von Filterschichten aus Filterhilfsmitteln in technischen Filteranlagen sind bekannt.

Nach Beendigung der Filtration werden die auf den Siebböden zurückbleibenden Filterschlammschichten von den Siebböden entfernt und in Containern oder anderen geeigneten Behältern für den Abtransport gesammelt. In Abhängigkeit von der Filtrationstechnologie und der der Filtration nachgeschalteten Waschgänge zum Auswaschen des Filterschlamms enthalten diese etwa 20 bis 70% Feststoff.

Diese Filterschlämme können je nach Konsistenz und Wassergehalt über geeignete Förderaggregate wie beispielsweise Transportbänder, Förderschnecken oder auch Pumpen zu dem Hydrothermalreaktor transportiert werden. Prinzipiell ist eine getrennte Einbringung des Filterschlamms direkt in den Reaktor selbst, in einen getrennten Vorlagebehälter, in den Vorlagebehälter für die Alkalikomponente oder auch in den Vorlagebehälter für die Natronlauge möglich. Die technisch bevorzugte Lösung hängt insbesondere von örtlichen Gegebenheiten ab, beispielsweise von der räumlichen Anordnung betreffend Entfernung und Höhenunterschied von Hydrothermalanlage und Filter zueinander.

In einer bevorzugten Ausführungsform der Erfindung wird die hydrothermale Umsetzung von Filterschlamm und Silikatkomponente in einem rotierenden, zylindrischen Druckbehälter, der um seine horizontale Achse drehbar gelagert ist, durchgeführt.

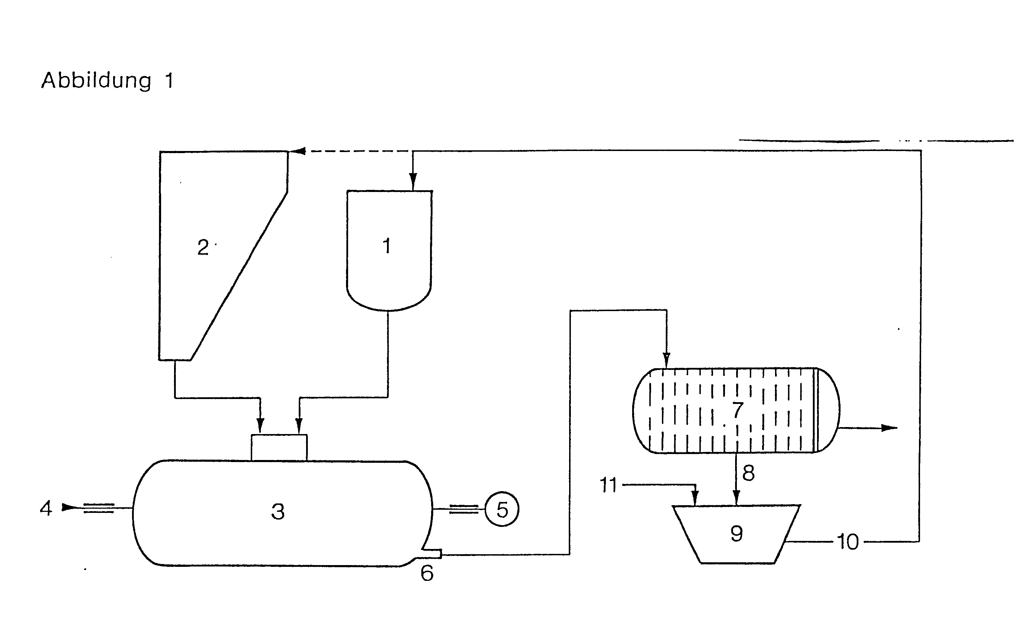

Abbildung 1 zeigt ein beispielhaftes Fließschema für diese Ausführungsform des erfindungsgemäßen Verfahrens. Die angegebenen Ziffern haben die nachstehende Bedeutung:

1) Vorratsbehälter für die wäßrige Natronlauge
2) Vorratsbehälter für die $SiO_2$-Komponente
3) Reaktionsbehälter
4) Zufuhr für den gesättigten Wasserdampf
5) Antriebsmotor für den Reaktionsbehälter
6) Auslaßöffnung für die gebildete aluminiumhaltige Natriumsilikat-Lösung
7) Anschwemm-Filteranlage
8) Filterschlammabwurf
9) Filterschlammsammelbehälter
10) Filterschlammrückführungsleitung mit Förderaggregat
11) Zuleitung prozeßexterner Filterschlämme Die Silikatkomponente (Sand), Natronlauge und Filterschlamm werden chargenweise aus den Vorratsbehältern (1 und 2) in den Reaktionsbehälter (3) eingefüllt. Anschließend wird die wäßrige Feststoff/Natronlauge-Suspension im rotierenden Druckbehälter auf die gewünschte Reaktionstemperatur aufgeheizt. Dieses Aufheizen des Reaktionsgemisches kann sowohl indirekt — beispielsweise durch geeignete Heizelemente im Reaktionsbehälter oder Mantelbeheizung desselben — als auch direkt durch Einleiten von Wasserdampf in den Reaktionsbehälter — wie auch im Fließschema über Zufuhr (4) beispielhaft dargestellt — erfolgen. Vorzugsweise wird wegen erhöhter Aufheizgeschwindigkeit dem Reaktionsgemisch gesättigter Wasserdampf bis zum Erreichen der gewünschten Reaktionstemperatur zugeführt, wobei sich gleichzeitig der dieser Temperatur entsprechende Druck des gesättigten Wasserdampfes im Reaktionsbehälter einstellt.

Das Reaktionsgemisch wird so lange unter den eingestellten Temperatur/Druck-Bedingungen in dem rotierenden Druckbehälter belassen, bis eine Probe der gebildeten Lösung das Erreichen der gewünschten $SiO_2$-Konzentration anzeigt. Die hierfür jeweils erforderlichen Reaktionszeiten lassen sich im allgemeinen im Verlauf einiger weniger Reaktionsabläufe empirisch ermitteln. Es ist ökonomisch vorteilhaft, die Gesamthydrothermalreaktion vorrangig auf die anzustrebende $SiO_2$-Endkonzentration abzustimmen und dann die Umsetzung abzubrechen.

Anschließend wird der rotierende Reaktionsbehälter angehalten und die noch unter Druck stehende oder auf Normaldruck entspannte aluminiumhaltige Natriumsilikatlösung auf ein Anschwemmfilter (7) übergeführt und filtriert. Nach Beendigung der Filtration wird der Filterschlamm ggf. kurz gewaschen und dann über die Abwurfstelle (8) in den Filterschlammsammelbehälter (9) abgeworfen. Diesem Behälter können auch prozeßexterne, erfindungsgemäß geeignete Filterschlämme zugeführt werden. Aus dem Filterschlammsammelbehälter werden dann über ein Fördersystem (10) die ggf. mit wenig Wasser oder Natronlauge versetzten Filterschlämme alternativ in den Sand- oder Natronlauge-Vorratsbehälter transportiert. Stehen hydrothermale Silikatproduktion und anteilige Filterschlammenge nicht in solchem Gleichgewicht, daß das gesamte Aluminiumsilikat im Filterschlamm gelöst wird, so findet eine allmähliche Aluminatanreicherung statt. Durch das stetige Rückführen des Filterschlamms steigt zunächst nur der $Al_2O_3$-Gehalt immer mehr an, dann auch schließlich die Gesamtfilterschlammenge. Darüber hinaus reichern sich jedoch allmählich auch die nicht hydrothermal aufschließbaren Schwermetallsilikate laufend an. Bei den technisch bevorzugt eingesetzten Sand- und Filterhilfsmittelqualitäten machen sich diese kumulierten Mengen jedoch erst nach etwa 10 Rückführungen bemerkbar. Im Einzelfall ist bereits nach einigen Probeläufen zu übersehen, nach wieviel Zyklen dann ein vollständiges Verwerfen des Filterschlamms betrieblich vorteilhaft ist.

In einer zweiten bevorzugten Ausführungsform der Erfindung wird für die hydrothermale Umsetzung ein statischer Behälter verwendet. Hierbei wird die flüssige Phase des Reaktionsgemisches bei Temperaturen im Bereich von 180 bis 250 °C, vorzugsweise 200 bis 210 °C, und den diesen Temperaturen entsprechenden Drücken von gesättigtem Wasserdampf so lange im Kreislauf durch ein in dem statischen Reaktionsbehälter eingebrachtes Feststoffbett aus Filterschlamm und Silikatkomponente unter Ausbildung einer Wirbelschicht sowie durch eine außerhalb des Behälters angeordnete Umgehungsleitung gepumpt, bis die $SiO_2$-Konzentration in der flüssigen Phase den angestrebten Wert erreicht hat (siehe oben).

Hierbei handelt es sich im wesentlichen um die Ausbildung einer Wirbelschicht des Reaktionsgemisches in der eigentlichen Reaktionszone, in der auf diese Weise ein permanenter und intensiver Stoffaustausch zwischen den Reaktionskomponenten einerseits und der gebildeten Natriumsilikat-Lösung andererseits stattfindet. Die Ausbildung dieser Wirbelschicht bedingt gegenüber konventionellen Hydrothermalverfahren bei sonst gleichen Reaktionsbedingungen und bezogen auf die gleichen Mengen Filterschlamm und Silikatkomponente sowohl eine beträchtliche Verkürzung der Reaktionszeit als auch hohe $SiO_2$-Konzentrationen der gebildeten Lösung.

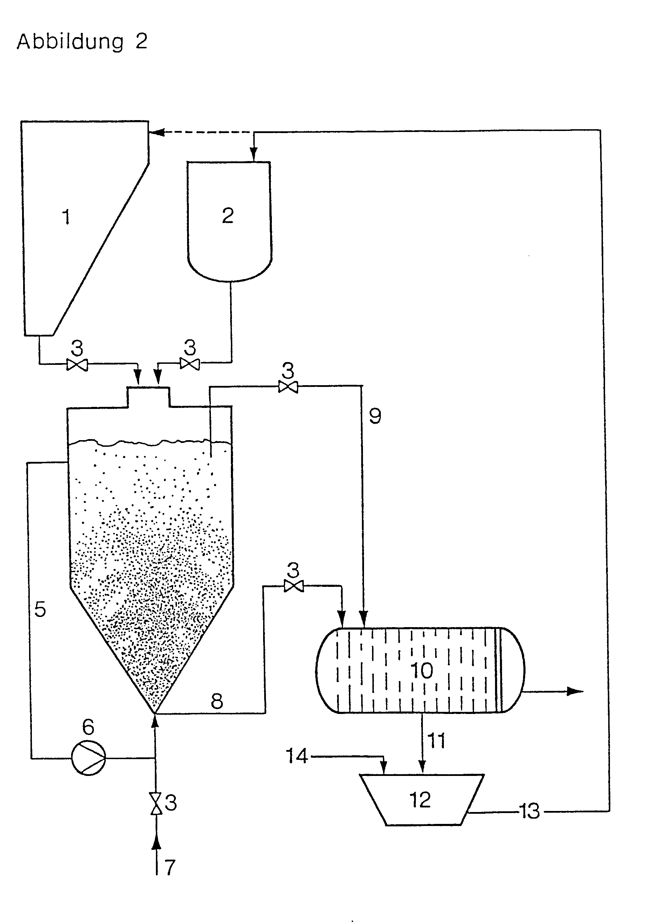

Abbildung 2 zeigt ein beispielhaftes Fließschema für diese zweite Ausführungsform des erfindungsgemäßen Verfahrens. Die hierin angegebenen Ziffern haben die nachstehende Bedeutung:

1) Vorratsbehälter für die $SiO_2$-Komponente
2) Vorratsbehälter für die wäßrige Natronlauge
3) Dosierventile
4) Reaktionsbehälter
5) Umgehungsleitung
6) Pumpe
7) Zufuhr für gesättigten Wasserdampf
8) Rohrleitung zum Entleeren des Reaktionsbehälters
9) Rohrleitung zum Entleeren des Reaktionsbehälters

10) Anschwemm-Filter
11) Filterschlammabwurf
12) Filterschlammsammelbehälter
13) Filterschlammrückführungsleitung mit Fördersystem .
14) Zuleitung prozeßexterner Filterschlämme

Zur Durchführung des erfindungsgemäßen Verfahrens werden bei dieser Ausführungsform Sand als bevorzugte silikatische Komponente, Filterschlamm und wäßrige Natriumhydroxidlösung chargenweise aus den Vorratsbehältern (1 und 2) über geeignete Dosierventile (3) in das als Reaktor dienende statische Druckgefäß (4) eingebracht, wobei sich der Feststoff primär in dem unteren, zweckmäßigerweise konisch ausgebildeten Teil des Reaktionsbehälters in Form eines Feststoffbettes absetzt. Zur Ausbildung der erfindungswesentlichen Wirbelschicht wird nun dieses Feststoffbett durch ein stetiges Umpumpen der flüssigen Phase des Reaktionsgemisches nach Art eines Wirbelschichtprozeßes in Bewegung gebracht und gehalten. Hierbei wird die flüssige Phase im oberen Teil aus dem Reaktionsbehälter abgezogen und durch eine außerhalb des Behälters angeordnete Umgehungsleitung (5) sowie eine zweckentsprechende Pumpe (6) am unteren Ende des Behälters wieder in diesen eingeführt, so daß dieser Flüssigkeitsstrom stets unter Druck von unten her in das Feststoffbett – beziehungsweise in die bereits ausgebildete Wirbelschicht – einströmt.

Erfindungsgemäß ist unter «flüssiger Phase des Reaktionsgemisches» im wesentlichen sowohl die eingesetzte wäßrige Natronlauge als auch die im Verlaufe der Umsetzung gebildete aluminathaltige Natriumsilikat-Lösung zu verstehen, die ferner jedoch auch Anteile der aufgewirbelten Feststoffkomponenten enthalten kann.

Auch bei dieser Ausführungsform erfolgt das Aufheizen des Reaktionsgemisches auf die erforderliche Reaktionstemperatur zweckmäßigerweise durch direktes Einleiten von gesättigtem Wasserdampf in den Reaktionsbehälter, wobei man den Wasserdampf mit Vorteil gleichfalls am unteren Ende des Behälters (an Zufuhr gemäß Abbildung 2) in diesen einführt, um auf diese Weise ein Aufwirbeln des Feststoffbettes im Sinne einer Ausbildung der erfindungswesentlichen Wirbelschicht zu unterstützen. Gegebenenfalls kann das Reaktionsgemisch noch zusätzlich indirekt durch geeignete Heizelemente im Reaktionsbehälter oder eine Mantelbeheizung desselben aufgeheizt werden. Auch die Umgehungsleitung (5) kann gewünschtenfalls mit einem entsprechenden Heizmantel ausgestattet sein. Vorzugsweise wird jedoch dem Reaktionsgemisch gesättigter Wasserdampf bis zum Erreichen der gewünschten Reaktionstemperatur zugeführt, wobei sich gleichzeitig der dieser Temperatur entsprechende Druck des gesättigten Wasserdampfes im Reaktionsbehälter einstellt.

Erfindungsgemäß ist es ferner bevorzugt, daß man die Umsetzung bei Temperaturen im Bereich von 200 bis 210°C und den diesen Temperaturen entsprechenden Drücken von gesättigtem Wasserdampf durchführt. Die Wahl einer relativ niederen Reaktionstemperatur in diesem bevorzugten Temperaturbereich ermöglicht – in Verbindung mit den erfindungsgemäß erzielbaren kurzen Reaktionszeiten – die Durchführung der Umsetzungen mit einem möglichst geringen Energieaufwand.

Nach Erreichen der erwünschten Reaktionstemperatur wird das Reaktionsgemisch – unter stetigem Umpumpen der flüssigen Phase im Kreislauf – so lange unter den eingestellten Temperatur/Druck-Bedingungen in dem statischen Druckgefäß belassen, bis eine Probe der gebildeten aluminathaltigen Lösung das Erreichen der erwünschten $SiO_2$-Konzentration anzeigt. Die hierfür jeweils erforderlichen Reaktionszeiten lassen sich auch bei dieser Ausführungsform im allgemeinen im Verlauf einiger weniger Reaktionsabläufe empirisch ermitteln.

Nach beendeter Reaktion wird anschließend die gebildete – noch unter Druck stehende oder auf Normaldruck entspannte – Lösung durch die Leitungen (8) oder (9) auf ein Anschwemmfilter (10) überführt.

Der Filterschlamm gelangt dann wie beim ersten Ausführungsbeispiel über eine Abwurfstelle (11) in einen Sammelbehälter (12) und wird von dort ggf. zusammen mit anderen prozeßexternen Filterschlämmen über ein Filterschlammfördersystem (13) zur Hydrothermalanlage zurückgeführt.

Diese zweite bevorzugte Ausführungsform eignet sich auch für eine kontinuierliche Verfahrensweise. Dabei wird die gebildete aluminathaltige Natriumsilikat-Lösung kontinuierlich aus dem Reaktionsbehälter ausgeführt und die Reaktionskomponenten gleichfalls kontinuierlich in denselben nachdosiert. Das Einführen von Feststoffkomponenten und Natronlauge in den statischen Reaktionsbehälter erfolgt hierbei zweckmäßigerweise unter Verwendung entsprechender Druckpumpen; die Feststoffkomponenten werden vorzugsweise durch ein im Behälter angeordnetes Tauchrohr direkt in den unteren Teil desselben eingeleitet. Die Einhaltung der erwünschten Reaktionstemperatur sowie des Druckes wird durch eine entsprechend gesteuerte – gegebenenfalls kontinuierliche – Zufuhr von gesättigtem Wasserdampf gewährleistet. Nach einer gewissen Anlaufzeit der hydrothermalen Umsetzung, die sich mit Hilfe von Proben der gebildeten Lösung hinsichtlich deren $SiO_2$-Konzentration ermitteln läßt, wird die gewonnene aluminathaltige Lösung – vorzugsweise über die Leitung (9) – kontinuierlich aus dem Reaktionsbehälter abgezogen und auf das Filter überführt.

In den bevorzugten Ausführungsformen der Erfindung wird zur Abtrennung der nach dem Verfahren der Erfindung erhaltenen aluminathaltigen Natriumsilikat-Lösung durch Filtration ein Anschwemm-Filter wie beschrieben verwendet. Als Filtermedium für dieses Feststoff-Filter wird im Sinne der Erfindung neben den Filterhilfsmitteln auf Aluminiumsilikat-Basis vorzugsweise der Feststoffüberschuß der bereits zur Umsetzung verwendeten Silikatkomponente aus der beendeten Hydrothermalsynthese, gegebenenfalls im Gemisch mit überschüssiger Silikatkomponente aus einer der vorangegangenen chargenweisen Umsetzungen oder «frischer», d.h. noch nicht hydrothermal umgesetzter Silikatkomponente eingesetzt. Die Silikatkomponente wird also nicht nur bezüglich des verwendeten Filterschlamms in hohem Überschuß eingesetzt, sondern auch bezogen auf die angestrebte Natriumsilikatlösung, d.h., die hydrothermale Reaktion wird so rechtzeitig abgebrochen, daß ein geringer Teil der silikatischen Hauptkomponente von etwa 3 bis 5% noch als Feststoff vorliegt. Diese Vorgehensweise führt zu einer besonders hohen Raum/Zeit-Ausbeute.

Zur Bereitung des Feststoff-Filters wird zuerst der sich im unteren Teil des Reaktionsbehälters absetzende überschüssige Feststoff auf das Filterbett übertragen. Gegebenenfalls noch im Reaktionsbehälter verbliebene Feststoffkomponente kann für die nachfolgende Umsetzung in diesem belassen oder aber zur Bereitung des Feststoff-Filters für eine der nachfolgenden Chargen verwendet werden.

Das Feststoffbett des Filters wird mit Vorteil vor dem Aufbringen der zu filtrierenden Lösung durch eine von unten anströmende, im Kreislauf geführte geringe Menge an Flüssigkeit – beispielsweise Wasser oder gegebenenfalls Natriumsilikatlösung – in einer Weise aufbereitet, daß die Feinanteile der eingesetzten Feststoffkomponenten an die Oberfläche des Filterbettes geschwemmt werden und somit eine hinreichend wirksame Filterschicht ausbilden.

Es hat sich bei der Durchführung der Filtration als besonders vorteilhaft erwiesen, die noch heiße, unter Druck stehende Lösung auf das Feststoff-Filter aufzugeben, da hierbei der gesamte Restfeststoff für die nachfolgende Umsetzung bereits vorgeheizt und der Wärmegehalt der heißen Lösung energiesparend genutzt wird.

Aus der beim erfindungsgemäßen Verfahren erhaltenen aluminathaltigen Natriumsilikatlösung kann auf unterschiedliche Weise beispielsweise Aluminiumhydroxid und Kieselsäure ausgefällt werden. Ökonomischer ist jedoch wegen des merklichen Aluminiumgehaltes der Natriumsilikatlösung von bis zu 0,5% $Al_2O_3$ deren direkte Verwendung z.B. als Silikatkomponente zur Herstellung von Aluminiumsilikaten, insbesondere und bevorzugt von zeolithischen Natriumaluminiumsilikat des NaA.

In den nachfolgenden Beispielen, die – soweit nicht anders vermerkt – in der vorstehend beschriebenen Weise durchgeführt wurden, wird die Auswirkung des erfindungsgemäßen Verfahrens hinsichtlich Reaktionsdauer und erforderlichen Reaktionstemperaturen anhand von Daten aufgezeigt.

Beispiele

Der Anmeldungsgegenstand wird durch die nachfolgenden Beispiele näher erläutert, ohne darauf beschränkt zu sein. Für «Hydrothermalverfahren» wurde dabei auch die Abkürzung «HT» benutzt.

Die Beispiele wurden sowohl in großtechnischem Maßstab als auch in Einzelfällen für Vergleichszwecke im Labor durchgeführt. Als erfindungsgemäß zu verwertende Filterschlämme wurden drei verschiedene Materialien verwendet, wie sie technisch in großem Umfang anfallen. Für die Versuche wurden hinreichend große, repräsentative Chargen mittels Flügelrührer gründlich durchmischt.

Das im Hydrothermalwasserglas-Filterschlamm und im Schmelzwasserglas-Filterschlamm enthaltene Filterhilfsmittel ist ein marktgängiges röntgenamorphes Produkt auf Aluminiumsilikat-Basis mit 80,6% $SiO_2$ und 13,7% $Al_2O_3$ bei zu vernachlässigendem Wassergehalt.

Der in den Beispielen verwendete Quarzsand enthielt 4,0% Wasser und im Feststoff 99,7% $SiO_2$ sowie bis zu 0,15% $Al_2O_3$.

Die für die Zusammensetzung der Filterschlämme wichtigen Analysenwerte gehen aus Tabelle 1 hervor.

a) HT-Filterschlamm

Hierbei handelt es sich um Filterschlamm, wie er bei großtechnischer Herstellung von Natriumsilikatlösung nach dem Hydrothermalverfahren in großen Mengen anfällt.

Die für die beispielhaften Versuche verwendete Charge enthielt im Feststoff gemäß Schätzungen aus Analysenwerten, Pulveraufnahmen und Sedimentationsmessungen etwa 65 Gewichts-% Sand, etwa 25 Gewichts-% Filterhilfsmittel, etwa 5 Gewichts-% wasserlösliches Natriumsilikat (Gewichtsverhältnis $SiO_2$:$Na_2O$ = 2,0) aus der dem Filterschlamm noch trotz Waschung anhaftenden Lösung sowie etwa 5 Gewichts-% Schwermetallsilikat und andere nicht definierte Rückstände aus der Hydrothermalproduktion.

b) Wasserglas-Filterschlamm

Hierbei handelt es sich um Filterschlamm, wie er bei großtechnischer Filtration wässeriger Lösungen von Schmelzwasserglas der Zusammensetzung $Na_2O \cdot 3,3 - 3,4\, SiO_2$ anfällt. (In wässeriger Lösung: 27% $SiO_2$ und 8% $Na_2O$).

Die für die Versuche verwendete Filterschlammcharge enthielt im Feststoff etwa 18 Gewichts-% Filterhilfsmittel und etwa 7 Gewichts-% wasserlösliches Natriumsilikat (Gewichtsverhältnis $SiO_2$:$Na_2O$ = 3,37) aus der dem Filterschlamm trotz Waschung anhaftenden Lösung sowie eine Restmenge von entsprechend etwa 75 Gewichts-% an Silikaten mehrwertiger Metalle und anderen nicht definierten im Rahmen des Wasserglaslöungsprozesses anfallenden unlöslichen Rückständen aus dem Schmelzglas.

c) Molekularsieb-Filterschlamm

Hierbei handelt es sich um ein Abfallprodukt aus der Molekularsiebherstellung. Die für die Versuche verwendete Filterschlammcharge enthielt im Feststoff gemäß Analysenwerten und Pulverdiffraktogramm ausschließlich Natriumaluminiumsilikat im Gemisch aus etwa 80% Hydroxysodalith und 20% Molekularsieb NaA. Molekularsieb-Filterschlamm fällt technisch u.a. auch als Filterdurchschlag (Suspension von etwa 1% Feststoff in 10–20%iger Natronlauge) an.

Tabelle 1
.Analysendaten der in den Beispielen eingesetzten Ausgangs-Filter-schlämme (Hauptbestandteile)

| Filterschlamm | % Feststoff-gehalt[1] | Feststoffzusammensetzung[2] | | |
|---|---|---|---|---|
| | | % $SiO_2$ | % $Al_2O_3$ | % $Na_2O$ |
| a) HT-Filterschlamm | 41 | 87,5 | 4,2 | 6,0 |
| b) Wasserglas-Filter-schlamm | 32 | 90,8 | 3,2 | 1,8 |
| c) Molekularsieb-Filterschlamm | 37 | 42,2 | 34,7 | 23,1 |

[1] Durch Trocknen bei 120°C und anschließendes 1stündiges Glühen bei 800°C bestimmt
[2] Röntgenfluoreszenzanalytisch ermittelt

Die Beispiele 1 bis 5 wurden für Vergleichszwecke im Labor durchgeführt. Als Reaktionsgefäße dienten Nickel-Autoklaven mit einem Nutzvo-lumen von 0,2 l, welche in einem auf 200 $\pm$ 1°C thermostatisierten Wärmebad um ihre Längsachse rotierten.

Beispiel 1
Ein Reaktionsgemisch von 200 g 30%iger Natronlauge, 93 g Quarzsand und 5 g Filterhilfsmittel wurde im Autoklaven im Hinblick auf eine vollständige Umsetzung über eine Dauer von 120 Minuten bei 200 $\pm$ 1°C umgesetzt. Die resultierende Lösung enthielt keine merklichen Mengen Feststoff (Rückstand kleiner als 0,1 g) und wies eine Zu-sammensetzung von 31,2% $SiO_2$ und 15,6% $Na_2O$ (Gewichtsverhältnis 2,0) auf.

Beispiel 2
In Abänderung der im Beispiel 1 genannten Versuchsbedingungen wurde 97 g Quarzsand eingesetzt und die hydrothermale Behandlung bereits nach 40 Minuten abgebrochen. Die resultierende Lösung wies eine gleiche Zusammensetzung wie unter Beispiel 1 auf, der zurückbleibende Feststoff enthielt nur Quarzsand und praktisch kein Filterhilfsmittel (Aluminiumgehalt im Rückstand unterhalb 0,3 Gew.-%).

Beispiel 3
Ein Reaktionsgemisch von 200 g 30%iger Natronlauge, 96 g Quarzsand und 1,5 g Molekularsieb-Filterschlamm wurde im Autoklaven über eine Dauer von 120 Minuten bei 200 $\pm$ 1°C umge-setzt. Die resultierende Lösung enthielt keine merklichen Mengen an Feststoff (Rückstand kleiner als 0,1 g) und wies wie in den Beispielen 1 und 2 eine Zusammensetzung von 31,2% $SiO_2$ und 15,6% $Na_2O$ (Gewichtsverhältnis 2,0) auf.
Die Laborbeispiele 1 bis 3 zeigen, daß sich bei der erfindungsgemäßen Arbeitsweise die einge-setzten Filterschlämme praktisch vollständig um-setzen. Die Beispiele 4 und 5 zeigen die erfindungsgemäße Bedeutung der Verwendung eines hohen Silikatüberschusses.

Beispiel 4 (Vergleichsbeispiel)
Ein Gemisch von 10 g Filterhilfsmittel und 200 g 30%ige Natronlauge wurde über eine Dauer von 120 Minuten bei 200 $\pm$ 1°C umgesetzt. Der nach hydrothermaler Reaktion abfiltrierte Rückstand von etwa 5 g enthielt 40,6% $SiO_2$ und 25,3% $Al_2O_3$. Dies zeigt, daß sich aus dem Filterhilfsmittel prak-tisch kein $Al_2O_3$ sondern nur eine Teilmenge $SiO_2$ herauslöst.

Beispiel 5 (Vergleichsbeispiel)
Ein Gemisch von 25 g Molekularsieb-Filterschlamm und 200 g 30%ige Natronlauge wurde über eine Dauer von 120 Minuten bei 200 $\pm$ 1°C gehalten. Der nach dieser hydrothermalen Behandlung gelöste Rückstand entsprach in Menge und chemischer Zusammensetzung im Rahmen der Analysengenauigkeit dem Ausgangsmaterial; das Filtrat enthielt weniger als 0,1% gelöstes $SiO_2$. Der im Molekularsieb-Filterschlamm vorliegende Feststoff hatte sich also nicht merklich gelöst.

Die folgenden Beispiele 6 a) bis 6 d) wurden in großtechnischem Maßstab durchgeführt.

Als Reaktionsgefäß diente bei den Beispielen 6 a) bis 6 d) ein waagerecht angeordneter zylindrischer Druckbehälter mit einem Leervolumen von 24 $m^3$, der um seine horizontale Achse drehbar gelagert war. Die Beheizung wurde hierbei durch direktes Einleiten von gesättigtem Wasserdampf in den Druckbehälter vorgenommen. Die Drehzahl des rotierenden Reaktors betrug 6 Umdrehungen pro Minute.

Der aus dem Feststoff-Filter anfallende Filterschlamm wurde in den angegebenen Mengen mittels einer Zweizylinder-Kolbenpumpe in den Na-tronlauge-Vorlagebehälter gepumpt. Die Ver-suchsanordnung entspricht Abbildung 1.
Die in den Beispielen angegebenen Stoffmengen wurden in den Reaktor gegeben, dieser dann verschlossen und in Rotation versetzt. Innerhalb von 25–30 Minuten wurde durch direktes Einleiten von 20-bar-Dampf das Reaktionsgemisch auf 200 $\pm$ 5°C aufgeheizt. Nach insgesamt 60 Minuten dauernder Rotation wurde die hydrothermale Reaktion abgebrochen, das Reaktionsgemisch unter Energierückgewinnung (Aufheizung der vorgelegten Natronlauge mittels entstehender Brüden auf 90–95 °C) auf Normaldruck entspannt und die Reaktionslösung unter Zugabe von frischem Filterhilfsmittel (45 kg pro Reaktorfüllung) über das Feststoff-Filter filtriert.

In den Beispielen 6 a) bis 6 d) wurden die vorher charakterisierten Filterschlämme verwendet. Die Ansatzmengen bezüglich Sand, Natronlauge und Filterschlamm sowie die Kenndaten der nach Filtration des resultierenden Reaktionsgemisches anfallenden Natriumsilikatlösungen sind in der Tabelle 2 angegeben.

Tabelle 2
Einzelversuche im betrieblichen Maßstab

| Beispiel Nr. | Einsatzstoffe und -mengen[1] | | | | | Zusammensetzung der filtrierten Lösung | |
| | Sand[2] | Lauge[3] | Filterschlamm[4] | | | % $SiO_2$ | % $Na_2O$ |
| | | | a) | b) | c) | | |
| 6 a) | 6300 | 12 400 | ohne | | | 27,0 | 13,5 |
| 6 b) | 6165 | 12 400 | 370 | – | – | 26,9 | 13,4 |
| 6 c) | 6140 | 12 400 | 370 | 90 | – | 27,0 | 13,3 |
| 6 d) | 6165 | 12 400 | 370 | – | 20 | 27,0 | 13,5 |

[1] Mengenangaben in kg pro Reaktorfüllung (zuzüglich Dampfkondensat)
[2] mit 4% Feuchte
[3] 30%ige Natronlauge
[4] Filterschlammqualitäten siehe Text und Tabelle 1

Bei Filtration der Chargen gemäß Beispiele 6 a) bis 6 d) nach dem beschriebenen Verfahren (Zusatz von 45 kg Filterhilfsmittel pro Reaktorfüllung) fielen Mengen von jeweils etwa 370 ± 10 kg Filterschlamm an.

Die weiteren Versuchsbedingungen sind in den Beispielen angegeben.

Beispiel 6 a)
Bei diesem Vergleichsversuch wurde kein Filterschlamm eingesetzt.

Beispiel 6 b)
Gegenüber Beispiel 6 a) wurde die eingesetzte Menge Sand um 135 kg verringert und stattdessen 370 kg HT-Filterschlamm zugefügt. Es resultierte nach hydrothermaler Reaktion eine Suspension, deren Feststoff praktisch ausschließlich aus dem im Überschuss verwendeten Sand bestand und weniger als 0,3% $Al_2O_3$ enthielt.

Beispiel 6 c)
Gegenüber Beispiel 6 a) wurde die eingesetzte Menge Sand um 160 kg verringert, stattdessen 370 kg HT-Filterschlamm sowie gleichzeitig 90 kg Wasserglas-Filterschlamm der wie oben beschriebenen Zusammensetzung eingesetzt. Es resultierte nach hydrothermaler Reaktion eine Suspension, deren Feststoff praktisch ausschließlich aus dem im Überschuß verwendeten Sand bestand und weniger als 0,3% $Al_2O_3$ enthielt.

Beispiel 6 d)
Unter Abänderung der in Beispiel 6 b) genannten Bedingungen wurde eine 30%ige Natronlauge verwendet, die insgesamt (bezogen auf eine Gesamtmenge von 12.420 kg) ca. 20 kg Molekularsieb-Filterschlamm der oben angegebenen Zusammensetzung als Filterdurchschlag enthielt.

Beispiel 7
Hierbei wurde unter Weiterführung der in Beispiel 6 b) genannten Bedingungen der HT-Filterschlamm 10mal vollständig in den HT-Prozeß zurückgeführt.

Wegen kleiner betrieblich bedingter Schwankungen in Reaktionszeit (± 5 Minuten) und Reaktionstemperatur (± 5 °C) zeigte auch die dabei resultierende filtrierte Natriumsilikatlösung eine leicht schwankende Zusammensetzung von 26,8 ± 0,7% $SiO_2$ und 13,4 ± 0,4% $Na_2O$.

Die Filterschlammengen nahmen während der Versuche nicht zu sondern blieben bei 370 ± 10 kg pro Reaktorfüllung. Der Aluminiumgehalt im Feststoff stieg dabei langsam von zunächst 4,2% $Al_2O_3$ (Null-Wert ohne Rückführung, durch frisches Filterhilfsmittel verursacht) auf ca. 6% $Al_2O_3$ nach 10 Rückführungen an.

Beispiel 8
Die Durchführung erfolgte in einem zylinderförmigen, vertikal angeordneten statischen Druckgefäß mit einem Leervolumen von 3,6 $m^3$, das in seinem unteren Teil konisch ausgebildet und mit einer der vorstehenden Beschreibung entsprechenden Umgehungsleitung ausgestattet war.

Die Beheizung erfolgte durch direktes Einleiten von gesättigtem 20-bar-Wasserdampf am unteren Ende des Druckbehälters.

Die eingesetzte Filtrationsanlage und Filterschlammrückführung entspricht dem Beispiel 3.

Die Versuchsanordnung zu Beispiel 8 geht aus Abbildung 2 hervor.

In den heißen, aus einer vorhergehenden Charge noch mit einer Restmenge von ca. 50 kg gefüllten Reaktor wurden 1.450 kg Sand, 3.000 kg einer auf 95 °C aufgeheizten 30%igen Natronlauge sowie 100 kg HT-Filterschlamm gegeben.

Nach zweistündiger Reaktion bei 190–200°C wurde das Reaktionsgemisch nach Entspannung auf Normaldruck filtriert. Die so erhaltene Lösung enthielt 25,6% $SiO_2$ und 12,6% $Na_2O$.

Der vor Filterhilfsmittelzugabe vorliegende Feststoff im Reaktionsgemisch enthielt praktisch ausschließlich Sand und weniger als 0,3% $Al_2O_3$.

**Patentansprüche**

1. Verfahren zum hydrothermalen Aufschluß von Aluminiumsilikaten und Alkalialuminiumsilikaten mit wäßriger Natriumhydroxidlösung unter Druck und bei erhöhten Temperaturen in Gegenwart von löslichen Silikaten, dadurch gekennzeichnet, daß man eine 20 bis 50 Gewichtsprozent NaOH enthaltende wäßrige Lösung mit Aluminiumsilikaten und/oder Alkalialuminiumsilikaten sowie einer hydrothermal aufschließbaren Silikat-Komponente vermischt, wobei in der Mischung die Gewichtsverhältnisse von $SiO_2$:$Al_2O_3$ mindestens 30:1 und die Gewichtsverhältnisse $SiO_2$:$Na_2O$ mindestens 1,5:1 betragen und die Gemische bei Temperaturen von 180 bis 250°C sowie den diesen Temperaturen entsprechenden Drükken von gesättigtem Wasserdampf umsetzt und danach die anfallende, das gelöste Aluminium enthaltende Natriumsilikatlösung abgetrennt wird.

2. Verfahren gemäß Anspruch 1, dadurch gekennzeichnet, daß als Silikatkomponente Kieselsäure, Sand und/oder Alkalisilikate eingesetzt werden.

3. Verfahren gemäß Anspruch 1 und 2, dadurch gekennzeichnet, daß man die Umsetzung bei Temperaturen von 200 bis 210°C durchführt.

4. Verfahren gemäß Anspruch 1 bis 3, dadurch gekennzeichnet, daß man die Umsetzung mit 25 bis 35 gewichtsprozentiger Natronlauge durchführt.

5. Verfahren gemäß Anspruch 1 bis 4, dadurch gekennzeichnet, daß die Gewichtsverhältnisse von $SiO_2$:$Al_2O_3$ im Ansatz 50:1 bis 150:1 betragen.

6. Verfahren gemäß Anspruch 1 bis 5, dadurch gekennzeichnet, daß die hydrothermale Umsetzung von Natronlauge, Filterschlamm und Silikatkomponente in einem rotierenden zylindrischen Druckbehälter, der um seine horizontale Achse gelagert ist, durchgeführt wird.

7. Verfahren gemäß Anspruch 1 bis 6, dadurch gekennzeichnet, daß die hydrothermale Umsetzung in einem statischen Druckbehälter erfolgt, wobei die flüssige Phase des Reaktionsgemisches bei Temperaturen, die im Bereich von 180 bis 250°C liegen sowie diesen Temperaturen entsprechenden Drücken von gesättigtem Wasserdampf solange im Kreislauf durch ein in dem statischen Reaktionsbehälter eingebrachten Feststoffbett aus Filterschlamm und Silikatkomponente unter Ausbildung einer Wirbelschicht sowie durch eine außerhalb des Behälters angeordneten Umgehungsleitung gepumpt wird, bis die $SiO_2$-Konzentration in der flüssigen Phase den angestrebten Wert erreicht hat.

8. Verfahren gemäß Anspruch 1 bis 7, dadurch gekennzeichnet, daß die Umsetzung kontinuierlich durchgeführt wird.

**Claims**

1. A process for the hydrothermal fusion of aluminium silicates and alkali aluminium silicates with aqueous sodium hydroxide solution under pressure and at elevated temperature in the presence of soluble silicates, characterized in that an aqueous solution containing 20 to 50% by weight of NaOH is mixed with aluminium silicates and/or alkali aluminium silicates and with a hydrothermally fusible silicate component, the ratio by weight of $SiO_2$ to $Al_2O_3$ in the mixture amounting to at least 30:1 and the ratio by weight of $SiO_2$ to $Na_2O$ to at least 1.5:1, the mixtures are reacted at temperatures of from 180 to 250°C and under the saturated steam pressures corresponding to those temperatures, after which the sodium silicate solution accumulating, which contains the dissolved aluminium, is separated off.

2. A process as claimed in Claim 1, characterized in that silica, sand and/or alkali silicates are used as the silicate component.

3. A process as claimed in Claims 1 and 2, characterized in that the reaction is carried out at temperatures in the range from 200 to 210°C.

4. A process as claimed in Claims 1 to 3, characterized in that the reaction is carried out with 25 to 35% by weight sodium hydroxide.

5. A process as claimed in Claims 1 to 4, characterized in that the ratio by weight of $SiO_2$ to $Al_2O_3$ in the mixture amounts to between 50:1 and 150:1.

6. A process as claimed in Claims 1 to 5, characterized in that the hydrothermal reaction of sodium hydroxide, filtered sludge and silicate component is carried out in a rotating cylindrical pressure vessel mounted for rotation about its horizontal axis.

7. A process as claimed in Claims 1 to 6, characterized in that the hydrothermal reaction is carried out in a static pressure vessel, in which case the liquid phase of the reaction mixture is pump-recirculated through a solids bed of filter sludge and silicate component introduced into the static reaction vessel, thereby forming a fluidized bed, and through a bypass pipe arranged outside the vessel at temperatures in the range from 180 to 250°C and under saturated steam pressures corresponding to those temperatures until the concentration of $SiO_2$ in the liquid phase has reached the required value.

8. A process as claimed in Claims 1 to 7, characterized in that the reaction is carried out continuously.

**Revendications**

1. Procédé de décomposition hydrothermale de silicates d'aluminium et d'aluminosilicates alcalins avec une solution aqueuse d'hydroxyde de sodium, sous pression et à température élevée en présence de silicates solubles, caractérisé en ce que l'on mélange une solution aqueuse contenant de 20 à 50% en poids de soude avec des silicates d'aluminium et/ou des aluminosilicates alcalins ainsi qu'un composant silicaté décomposable par voie hydrothermale, pour lequel les rapports pondéraux dans le mélange de $SiO_2/Al_2O_3$ s'élèvent au moins à 30:1 et les rapports pondéraux $SiO_2/Na_2O$ au moins à 1,5:1, et les mélanges sont mis à réagir à des températures de 180 à 250°C ainsi qu'à des pressions de vapeur d'eau saturée correspondant à ces températures et ensuite la solution de silicate de sodium produite qui contient l'aluminium dissout est séparée.

2. Procédé selon la revendication 1, caractérisé en ce que, comme composant silicaté de l'acide silicique, du sable et/ou des silicates alcalins sont mis en œuvre.

3. Procédé selon les revendications 1 et 2, caractérisé en ce que la réaction est effectuée à des températures de 200 à 210°C.

4. Procédé selon les revendications 1 à 3, caractérisé en ce que l'on effectue la réaction avec de la lessive de soude à 25–35% en poids.

5. Procédé selon les revendications 1 à 4, caractérisé en ce que les rapports pondéraux de $SiO_2/Al_2O_3$ s'élèvent au commencement de 50:1 à 150:1.

6. Procédé selon les revendications 1 à 5, caractérisé en ce que la réaction hydrothermale de la soude, de la boue de filtration et des composants silicatés est effectuée dans un récipient sous pression cylindrique, rotatif qui est disposé autour de son axe horizontal.

7. Dispositif selon les revendications 1 à 6, caractérisé en ce que la réaction hydrothermale s'effectue dans un récipient sous pression statique, pour lequel la phase liquide du mélange réactionnel est pompée à des températures qui se situent dans la zone de 180 à 250°C et aux pressions de vapeur d'eau saturée qui correspondent à ces températures, en cycle au moyen d'un lit de substance solide introduit dans le récipient de réaction statique, à base de boue de filtration et de composant silicaté avec développement d'une phase tourbillonnaire ainsi qu'au moyen d'une canalisation de dérivation disposée à l'extérieur du récipient aussi longtemps que la concentration en $SiO_2$ dans la phase liquide n'ait atteint la valeur désirée.

8. Procédé selon les revendications 1 à 7, caractérisé en ce que la réaction est conduite en continu.

Abbildung 1

EP 0 118 588 B1

Abbildung 2